# EUROPÄISCHE PATENTSCHRIFT

(11) **EP 1 011 159 B1**
(45) Veröffentlichungstag und Bekanntmachung des Hinweises auf die Patenterteilung: **27.10.2004**
(21) Anmeldenummer: 99115414.7
(22) Anmeldetag: 04.08.1999
(51) Int. Cl.: H01M 2/36, H01R 13/00, B60R 16/04

(54) **Kombinierter Lade- und Fluidsteckverbinder**
Combined charge and fluid connector
Connecteur combiné de charge et fluide

(30) Priorität: 23.11.1998 DE 29820933 U
(43) Veröffentlichungstag der Anmeldung: 21.06.2000
(73) Patentinhaber: Schaltbau Aktiengesellschaft, D-81677 München (DE)
(72) Erfinder: Grunow, Werner, 74078 Heilbronn-Biberach (DE)
(74) Vertreter: Grünecker, Kinkeldey, Stockmair & Schwanhäusser Anwaltssozietät

(56) Entgegenhaltungen:
- EP-A- 0 197 818
- EP-A- 0 622 859
- DE-C- 19 535 102

## Beschreibung

Die vorliegende Erfindung bezieht sich auf einen kombinierten Lade- und Fluidsteckverbinder mit mindestens einem Fluid-Stecksystem, das einen Fluidstecker und eine mit diesem steckbare Fluiddose umfaßt.

Ein solcher Steckverbinder ist z.B. aus der DE 9016595 U1 bekannt. Dieser wird zum Anschließen von Traktionsbatterien an ein Ladegerät verwendet. Neben Trockenbatterien kommen auf dem Bereich der Flurförderfahrzeuge auch sogenannte Naßbatterien zum Einsatz, die in bekannter Weise mit einer Batterieflüssigkeit gefüllt sind. Es ist ferner bekannt, daß der Ladevorgang durch eine Verwirbelung der Batterieflüssigkeit z.B. mittels Luft beschleunigt und intensiviert werden kann. Des weiteren ist es zuweilen notwendig, Batterieflüssigkeit zu ersetzen bzw. nachzufüllen. Die bekannte Vorrichtung stellt nunmehr einen Steckverbinder bereit, der das gleichzeitige Herstellen sowohl der elektrischen als auch der Fluid-Verbindung durchführen läßt. Hierzu sitzen die Fluidsteckverbinder als sogenanntes Huckepack-System auf dem eigentlichen Ladesteckverbinder auf. Damit sichergestellt ist, daß keine Flüssigkeit in den elektrischen Bereich eindringen kann, sind zumeist zusätzliche Vorkehrungen getroffen, die z.B. den elektrischen Stromkreis ausschalten, sobald die Fluidkupplung gelöst wird.

Im Stand der Technik gibt es weitere Konzepte, die eine Kombination von Lade- und Fluidsteck-Systemen vorsehen. Teilweise sind die Fluidleitungen in das Steckergehäuse integriert, wie bei der DE 9204385 U1, oder als Huckepack-System, wie in der DE 9003174 U1, ausgestaltet. Zwar wird in diesen Druckschriften immer von einer Fluid-Führung gesprochen. Jedoch sind im praktischen Einsatz nur Stecker zur Anwendung gekommen, die eine Luftdurchleitung und somit eine Elektrolytumwälzung vornehmen. Das Zuleiten von Batterieflüssigkeit oder destilliertem Wasser kam bislang nicht über das Versuchsstadium hinaus, da erhebliche sicherheitstechnische Probleme sowie ein Scheitern im Genehmigungsverfahren einen Einsatz bislang verwehrten.

Es ist daher die Aufgabe der vorliegenden Erfindung, einen kombinierten Lade- und Fluidsteckverbinder der eingangs genannten Art bereitzustellen, der eine sichere Trennung von Fluid- und Stromführung gewährleistet.

Diese Aufgabe wird erfindungsgemäß dadurch gelöst, daß der Fluidstecker und die Fluiddose jeweils einen im Strömungspfad angeordneten Ventilstößel aufweisen, der jeweils mittels einer Federeinrichtung in Richtung eines im Strömungspfad angeordneten, eine Durchlaßöffnung umgebenden Ventilsitzes vorgespannt ist und dessen Dichtabschnitt im ungesteckten Zustand von Fluidstecker und Fluiddose auf dem Ventilsitz zum Schließen der Durchlaßöffnung dichtend aufsitzt, daß jeder Ventilstößel einen als Betätigungsstößel ausgebildeten Fortsatz aufweist, der jeweils in einen Übersteckungsbereich des Fluidsteckers und der Fluiddose derart hineinragt, daß im gesteckten Zustand von Fluidstecker und Fluiddose der Fortsatz des Fluidsteckers von einem Anschlag der Fluiddose und der Fortsatz der Fluiddose von einem Anschlag des Fluidsteckers mit einer Verschiebekraft entgegen der Wirkung der zugehörigen Federeinrichtung zum Öffnen der jeweiligen Durchlaßöffnung verschoben ist, wobei die Fortsätze zumindest abschnittsweise in einem zum Strömungspfad gehörenden Durchgang angeordnet sind und der Spalt zwischen einer Außenoberfläche des Fortsatzes und der Innenfläche des Durchgangs eine Länge und Breite derart aufweist, daß sich zumindest im ungesteckten Zustand von Fluidstecker und Fluiddose im Spalt eine, eine Restflüssigkeit bindende Kapillarwirkung einstellt.

Das bedeutet, daß der erfindungsgemäße Steckverbinder mit einem Fluidsteck-System ausgerüstet ist, durch das beim Steckvorgang automatisch eine Öffnung des Strömungspfades erfolgt, indem die Fortsätze entsprechend an einem Anschlag des jeweiligen Gegenstückes anschlagen und dann durch den weiteren Steckvorgang entgegen der Wirkrichtung der Federeinrichtung zurückbewegt werden und das Ventil öffnen. Der eigentliche Trick dieses Schließsystems besteht darin, daß die Fortsätze jeweils in einem Bereich des Strömungspfades angeordnet sind, wobei ein relativ enger Spalt zwischen der Innenwandung des Durchgangs und der Außenfläche des Fortsatzes gebildet ist. Bei gestecktem Fluidstecker mit gesteckter Fluiddose strömt aufgrund des Flüssigkeitsdruckes die Flüssigkeit durch den engen Spalt, so daß ein Austausch von Batterieflüssigkeit durchgeführt werden kann. Sobald jedoch nach dem Trennen des Fluidstekkers von der Fluiddose der Dichtabschnitt des Ventilstößels auf den Ventilsitz drückt, wird aufgrund der Kapillarwirkung die Restflüssigkeit im Bereich des Spaltes gebunden und ein Nachtropfen verhindert. Selbstverständlich ist hierzu der Übersteckungsbereich von Fluidstecker und Fluiddose derart ausgestaltet, daß diese erst voneinander komplett getrennt werden, nachdem die Ventile geschlossen sind. Diese Konstruktion hat den Vorteil, daß hierdurch ein äußerst trockener Steck- und Entkopplungsvorgang stattfinden kann und daß die Gefahr des Eindringens von Restflüssigkeit in den elektrischen Bereich im wesentlichen eliminiert ist. Auch das bislang im Versuch angewandte separate Öffnen der Fluidleitung durch externe Ventilanordnungen kann vollständig entfallen, da die Zuleitung ständig unter Druck stehen kann. Die gewünschte Rückhalte-Kapillarwirkung wird von der Länge und der Breite des Spaltes sowie der Oberflächenspannung der Batterieflüssigkeit (destilliertes H₂O) bestimmt. Entsprechend abhängig von der Batterieflüssigkeit könnten sich daher unterschiedliche Längen- und Breitenmaße zur Erzielung der gleichen Wirkung ergeben.

Die wohl einfachste Variante zum selbsttätigen Öffnen der Ventile kann dadurch erzielt werden, daß der Ventilstößel und der Fortsatz koaxial zueinander angeordnet sind und daß die Anschläge für die Fortsätze im Fluidstecker oder in der Fluiddose jeweils von einer Stirnseite des jeweils zugeordneten Fortsatzes des übersteckbaren Fluidsteckers oder der Fluiddose gebildet sind. Das bedeutet, daß die Fortsätze beim Steckvorgang koaxial aufeinanderdrücken und sich somit aufgrund der weiteren Steckbewegung bzw. des Ineinandersteckens des Übersteckungsbereichs ein automatisches Öffnen der Ventile ergibt. Bevorzugt werden hierzu gleichstarke Federeinrichtungen oder komplett identisch ausgebildete Ventilanordnungen verwendet. Die Fortsätze sind bevorzugt dann so ausgestaltet, daß sie bei Beginn des Steckvorgangs zur Anlage kommen, so daß die Ventile am Ende des Steckvorgangs in geeigneter und ausreichender Weise geöffnet sind.

Bevorzugt kann der Fortsatz im wesentlichen aus einem zylindrischen Grundkörper gebildet sein, wobei die Innenfläche des Durchgangs im Fluidstecker oder in der Fluiddose im wesentlichen als eine zylindrische Mantelfläche ausgestaltet ist. In einem solchen, im Querschnitt ringförmigen Spalt von im wesentlichen gleichbleibender Dicke läßt sich die gewünschte Kapillarwirkung sehr einfach erzielen. Auch das Herstellen des Fortsatzes und der Bohrung ist aufgrund der einfachen geometrischen Grundformen sehr einfach möglich. Der Ausdruck zylindrischer Grundkörper besagt hierbei, daß der Fortsatz ausgehend von einem Zylinder ausgestaltet ist. Das bedeutet nicht, daß der Querschnitt des Fortsatzes vollständig kreisförmig ist, sondern Aussparungen und ähnliches aufweisen kann.

Eine günstige, die Restflüssigkeit bindende Kapillarwirkung läßt sich bei einer Ausführungsform durch einen Spalt mit einer mittleren Breite von 0,1 mm bis 1 mm, bevorzugt 0,6 mm, erzielen. Die Länge des Spaltes kann hierbei mindestens 4 mm betragen, um diesen Effekt zu unterstützen.

Damit im geöffneten Zustand der Ventile eine ausreichende Flüssigkeitsmenge durch das Fluidsteck-System hindurchtreten kann, kann weiter vorgesehen sein, daß in dem Fortsatz mindestens ein sich längs erstreckender Kanal angeordnet ist, dessen Breite und Länge derart gewählt ist, daß sich zumindest im ungesteckten Zustand von Fluidstecker und Fluiddose im Kanal eine Restflüssigkeit bindende Kapillarwirkung einstellt. Solche Kanäle sind z.B. ausgehend von einem zylindrischen Grundkörper in den Fortsatz einformbar. Während der Gesamtdurchfluß-Querschnitt durch das Einbringen der Kanäle maßgeblich vergrößert wird, ist jeder einzelne Kanal derart geformt, daß er Restflüssigkeit durch eine Kapillarwirkung zurückhalten kann. Durch geschickte Formgestaltung des Querschnitts des Fortsatzes läßt sich das Verhältnis vom Gesamtströmungsquerschnitt und Spaltbreite bzw. Kanalbreite optimieren (n-fache Anreihung von Kanälen).

Eine weitere Möglichkeit besteht in der Anordnung von entsprechenden Kanälen in der Innenfläche des den Fortsatz umgebenden Durchgangs.

Bevorzugt kann der Kanal eine Breite von 0,1 mm bis 1 mm, bevorzugt 0,6 mm, und eine Länge von mindestens 4 mm aufweisen, damit sich die gewünschte Kapillarwirkung zum Zurückhalten der Restflüssigkeit einstellt.

Eine besonders günstige Form der Anordnung von Kanälen ergibt sich dadurch, daß der Fortsatz drei Kanäle aufweist, die derart versetzt zueinander angeordnet sind, daß der Fortsatz einen im wesentlichen W-förmigen Querschnitt aufweist. Dies wird insbesondere dadurch erzielt, daß in einer Querschnittshälfte zwei parallel verlaufende Kanäle angeordnet sind und in der anderen Querschnittshälfte des Fortsatzes ein zwischen diesen angeordneter und parallel zu diesen verlaufender Kanal angeordnet ist. Durch diese Ausgestaltung wird ein Fortsatz mit einer hohen Stabilität unter Bereitstellung eines möglichst großen Durchströmungs-Querschnittes erzielbar.

Eine weitere Variante besteht darin, daß der Fortsatz zum Bilden der Kanäle kreuzförmig längs geschlitzt ist. Durch die so erzielte Flexibilität des Fortsatzes ergeben sich im Einsatz strömungsgünstige Anpassungsmöglichkeiten, so daß eine verbesserte Durchströmung bei geöffnetem Fluidsteck-System gewährleistet ist.

Des weiteren kann sich der mindestens eine Kanal in Richtung seiner Tiefe und seiner Breite verengen. Hierdurch ist zusätzlich die Restflüssigkeit bei geschlossenem Ventil bestrebt, im Kanal haften zu bleiben, da der Kanal sich zu seinem Fuß hin verengt.

Es besteht auch die Möglichkeit, daß der mindestens eine Kanal sich in Richtung auf den Dichtabschnitt am Ventilstößel zu in seiner Breite verengt. Auch durch diese Verengung wird verstärkt bewirkt, daß Restflüssigkeit in Richtung des Dichtabschnittes und somit von dem Übersteckungsbereich weg durch die Kapillarwirkung gesaugt wird.

Um im Einsatz einen möglichst großen Durchfluß an Batterieflüssigkeit zu erhalten, kann der Gesamtquerschnitt des Spaltes und des mindestens einen Kanals bevorzugt mindestens 30% des fiktiven Grundkörper-Querschnitts des Fortsatzes betragen. Betrachtet man einen Fortsatz mit eingearbeiteten Kanälen, so bedeutet der Begriff fiktiver Grundkörper-Querschnitt den Querschnitt des Fortsatzes vor Einformung der Kanäle. Das bedeutet bei einer Ausführungsform mit zylindrischem Grundkörper einen Kreisquerschnitt.

Ein weiteres Kriterium für eine optimale Durchströmung des Fluidsteck-Systems ist in einer Weiterbildung dadurch gegeben, daß der Fluidstecker und/oder die Dose mit einem Zuleitungs- bzw. Abführschlauch verbunden sind, wobei der Gesamtquerschnitt des Spaltes und des mindestens einen Kanals mindestens 30%, bevorzugt 40%, des Durchlaßquerschnitts des Zuleitungs- bzw. Abführschlauchs beträgt. Hierdurch wird erreicht, daß trotz des Vorteils der Kapillarwirkung bei geschlossenem Ventil, bei geöffnetem Ventil eine möglichst kleine Drosselung des Fluidstroms stattfindet.

Die beste Dichtwirkung kann gemäß einer Ausführungsform dadurch erreicht werden, daß der Ventilsitz im wesentlichen kegelmantelförmige ausgestaltet ist und der Dichtabschnitt des Ventilstößels eine daran angepaßte Kontur aufweist. Das bedeutet aber auch, daß der Durchgang, in dem der Fortsatz angeordnet ist, an dem kleinen Durchmesser des Ventilkegels angrenzen kann. Hierdurch ist auch eine Anordnung des Fortsatzes unmittelbar an den Dichtabschnitt möglich. Die Kegelform bewirkt, daß auf der dem Ventilsitz abgewandten Seite des Dichtabschnitts eine große Fläche vorhanden ist, die mit Druck beaufschlagbar ist und somit die Schließbewegung unterstützt.

Um den Ventilstößel z.B. aus einem Stück fertigen zu können und dennoch einen relativ flexiblen Dichtabschnitt zu erhalten, kann der Dichtabschnitt als gestufte Kegelstumpfkontur am Ventilstößel ausgestaltet sein, wobei zumindest eine Stufe als Dichtungsringsitz ausgebildet ist. Weiter ist mindestens ein Dichtring auf dem Dichtungsringsitz angeordnet und mit dem Ventilsitz in Anlage bringbar. Dies hat auch den Vorteil, daß ggf. die Dichtringe ausgetauscht werden können. Des weiteren sind die Dichtringe aufgrund der Stufen sicher am Grundkörper positioniert. Darüber hinaus kann das Material der Dichtungen an die hindurchzuleitende Flüssigkeit angepaßt werden.

Es besteht aber auch die Möglichkeit, daß der Dichtabschnitt am Ventilstößel von einem mit einer kegelstumpfförmigen Mantelfläche versehenen elastischen Dichtkörper gebildet ist. Dieser kann auf den Ventilstößelgrundkörper austauschbar aufgesetzt oder fest mit diesem verbunden sein. Ein solcher Dichtkörper kann auch die Kontur meherer O-Ringe nachahmen. Der Zwischenraum zwischen derartigen O-Ringen oder Dichtwülsten eines einstückigen Dichtkörpers hat auch den Vorteil, daß Restflüssigkeit zwischen diesen eingefangen wird, so daß beim Schließvorgang des Ventils möglichst wenig Flüssigkeit in den Spalt gedrückt wird.

Um auch eine möglichst gute Abdichtung des Übersteckungsbereichs zu erhalten sowie die Abdichtung des Ventilsitzes zu verbessern, können der Ventilsitz, der Durchgang und der Übersteckungsbereich des Fluidsteckers und der Fluiddose von einem einstükkig hergestellten Elastomerelement geformt sein. Das bedeutet, daß der Durchgang und der Ventilsitz möglichst nah am Übersteckungsbereich angeordnet sind, so daß möglichst nur ein geringer Raum vorhanden ist, in dem sich Flüssigkeit bei der Trennung von Fluidstecker und Fluiddose mit Restflüssigkeit füllen kann.

Bevorzugt kann die Federeinrichtung eine koaxial zum Ventilstößel angeordnete Druckfeder sein, die auf der dem Fortsatz abgewandten Seite des Ventilstößels auf diesen eine Kraft ausübt. Die Druckfeder wird hierzu in aller Regel innerhalb des Strömungspfades angeordnet sein und kann wirksam auf der Rückseite eines konischen Dichtbereiches des Ventilstößels aufdrücken. Insbesondere läßt sich die Öffnungs- und Schließkraft des Ventils durch eine derartige Druckfeder sehr genau vorherbestimmen. Die Druckfeder kann so dimensioniert sein, daß ihr Anpreßdruck ca. 10% der üblichen Trennkraft des gesamten Steckverbinders ausmacht. Auf ein Verriegelungs-System kann daher verzichtet werden, zumal eine Übertragung von Fluiden durch den Stecker nicht während des "rüttelnden" Fahrbetriebs vorgesehen ist, sondern dem stationären Ladevorgang vorbehalten ist.

Damit auch der Ventilstößel sicher koaxial geführt und dennoch ein möglichst großer Strömungsquerschnitt vorhanden ist, kann der Ventilstößel auf der dem Fortsatz abgewandten Seite einen Stiftabschnitt mit radial abstehenden Führungsstegen aufweisen, wobei die Führungsstege den Ventilstößel axial im Strömungspfad führen, wobei die Federeinrichtung sich an der Seitenflanke zumindest eines Führungsstegs abstützt. Zum Beispiel können drei radial abstehende Führungsspeichen vorhanden sein. Für eine bessere Führung können in einigem Abstand noch einmal derartige Führungsstege angeordnet werden. Um ein möglichst geringes Strömungshindernis darzustellen, sollten diese axial zueinander versetzten Führungsstege nicht in ihrer Winkellage bezüglich der Ventilstößelachse zueinander versetzt sein.

Besonders einfach läßt sich die gesamte Konstruktion gestalten, wenn gemäß einer Ausführungsform der Ventilsitz, der Ventilstößel und die Federeinrichtung koaxial in einem gemeinsamen rohrförmigen Gehäuse des Fluidsteckers oder der Fluiddose angeordnet sind, wobei an einem Ende des Gehäuses der Übersteckungsbereich und an dem anderen Ende der Zuleitungs- bzw. Abführschlauch angeordnet ist. In diesem Gehäuse läßt sich z.B. auch das im Übersteckungsbereich bildende Elastomerelement in vorteilhafter Weise anbringen, z.B. durch Verrasten oder Verclipsen an einer Hinterschneidung.

Die erfindungsgemäße Lade- und Fluidsteck-Verbindung kann nicht nur zur Führung von Batterieflüssigkeit, sondern auch zur Übertragung von sowohl Batterieflüssigkeit als auch Luft Anwendung finden, so daß sowohl eine Elektrolytumwälzung als auch ein Austausch bzw. Nachfüllen der Batterieflüssigkeit in einem stattfinden kann. Zur Vereinfachung der Konstruktion könnte bei einer Luftführung auf das gleiche Ventil-System zur Reduzierung der Teilevielfalt zurückgegriffen werden.

Im folgenden werden Ausführungsbeispiele der Erfindung anhand einer Zeichnung näher erläutert. Es zeigen:
- Fig. 1: eine perspektivische Darstellung einer Stiftkontaktdose eines kombinierten Lade- und Fluidsteckverbinders,
- Fig. 2: eine perspektivische Darstellung eines Buchsenkontaktsteckers eines kombinierten Lade- und Fluidsteckverbinders,
- Fig. 3: eine Querschnittsdarstellung eines Fluidsteck-Systems in ungestecktem Zustand,
- Fig. 4: das Fluidsteck-System aus Fig. 3 im gesteckten Zustand,
- Fig. 5: eine perspektivische Darstellung einer ersten Ausführungsform eines Ventilstößels,
- Fig. 6: eine perspektivische Darstellung einer zweiten Ausführungsform eines Ventilstößels,
- Fig. 7: eine vergrößerte Querschnittsdarstellung des Übersteckungs- und Ventilsitzbereichs des Fluidsteckers und
- Fig. 8: eine vergrößerte Querschnittsdarstellung des Übersteckungs- und Ventilsitzbereichs der Fluiddose.

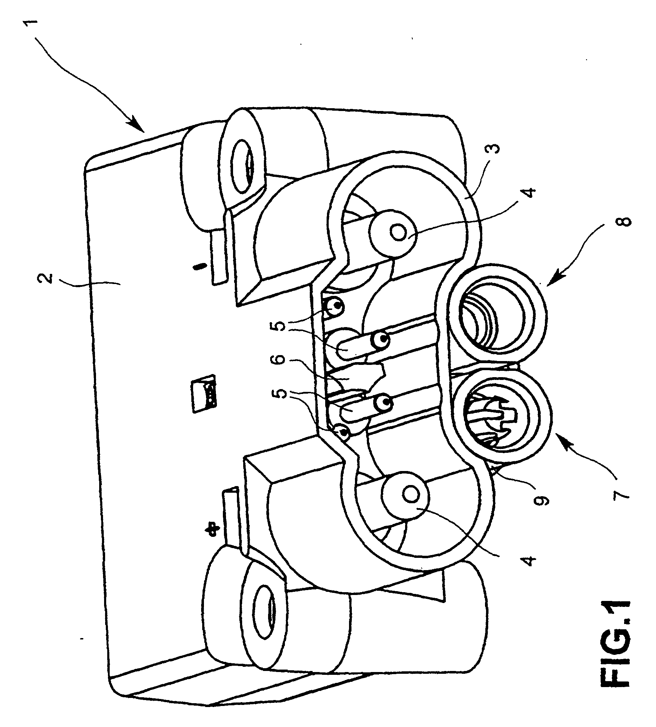

Der in Fig. 1 dargestellte Stiftkontaktstecker 1 umfaßt im wesentlichen ein Gehäuse 2 mit einer Anschlußschürze 3, die im wesentlichen das elektrische Steckgesicht umgibt. Innerhalb der Anschlußschürze 3 sind die beiden Hauptstiftkontakte 4, die vier Pilotstiftkontakte 5 sowie ein Kodierstift 6 angeordnet. Der Kodierstift 6 dient zur Spannungskodierung und zur Unterscheidung von Naß-, Trocken- und anderen Lade-Systemen.

Unterhalb der Anschlußschürze 3 ist im Gehäuse 2 eine Fluiddose 7 und eine Fluiddose 8 angeordnet. Die Fluiddose 8 dient zum Durchleiten von Luft und die Fluiddose 7 zum Durchleiten von Batterieflüssigkeit oder destilliertem Wasser, weshalb sie mit einem Ventil-System versehen ist. Die Fluiddose 8 könnte mit dem gleichen Ventil-System ausgerüstet werden. Dies ist jedoch aufgrund des harmlosen Mediums Luft nicht unbedingt erforderlich. Die Fluiddosen 7 und 8 sind in einem gemeinsamen Gehäusebereich 9 untergebracht. Weiter unten wird lediglich die Fluiddose 7 im Detail beschrieben werden. Diese unterscheidet sich von der Fluiddose 8 durch ihr Ventil-System. Aufgrund der Angleichung von Bauteilen ist die Ventildose 8 bezüglich des restlichen Aufbaus identisch zur Fluiddose 7.

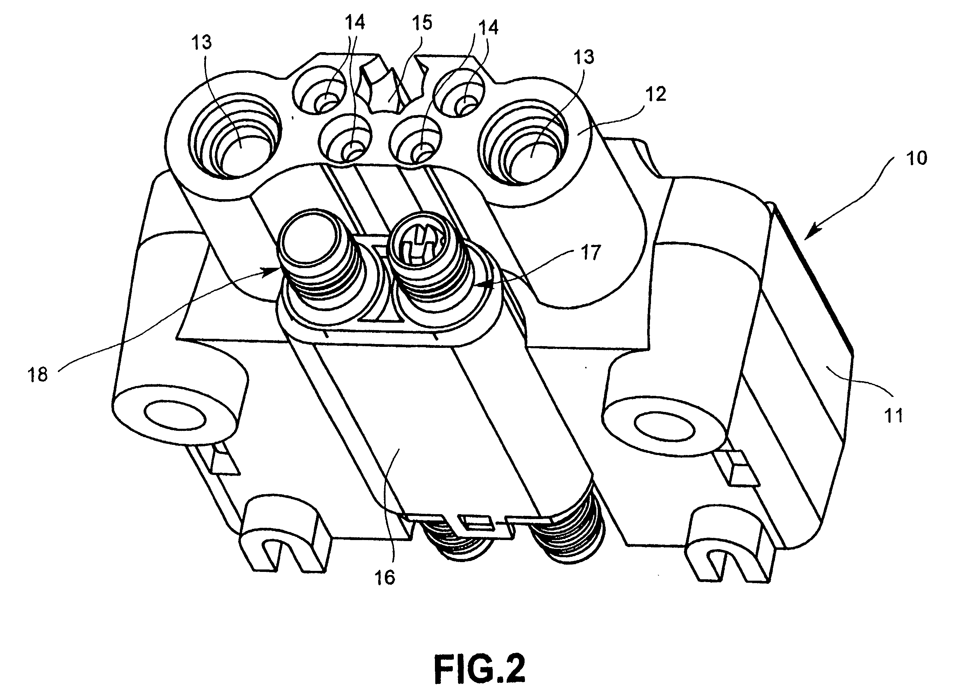

Der Stiftkontaktstecker 1 aus Fig. 1 läßt sich mit einer Buchsenkontaktdose aus Fig. 2 überstecken. Die Buchsenkontaktdose 10 umfaßt ein Gehäuse 11, einen an diesem angeordneten und im wesentlichen paßgenau in die Anschlußschürze 3 einsteckbaren Steckabschnitt 12. In dem Steckabschnitt 12 sind die Buchsenhauptkontakte 13 sowie die vier Pilotbuchsenkontakte 14 angeordnet. Der ebenfalls im Steckabschnitt 12 angeordnete Kodierstift 15 ist mit dem Kodierstift 6 des zugehörigen Stiftkontaktsteckers 1 übersteckbar.

Unter dem Steckabschnitt 12 ist ein Gehäusebereich 16 angeordnet, in dem zwei parallel zueinander angeordnete Fluidstecker 17 und 18 angeordnet sind. Der Fluidstecker 18 ist mit der Fluiddose 8 übersteckbar und weist wie diese kein Ventil-System auf. Im Gegensatz hierzu weist der Fluidstecker 17 ähnlich der Fluiddose 7 ein Ventil-System auf und ist zum Durchleiten von Batterieflüssigkeit geeignet und mit der Fluiddose 7 übersteckbar. Bis auf das Ventil-System ist der Fluidstecker 18 identisch mit dem Fluidstecker 17 aufgebaut.

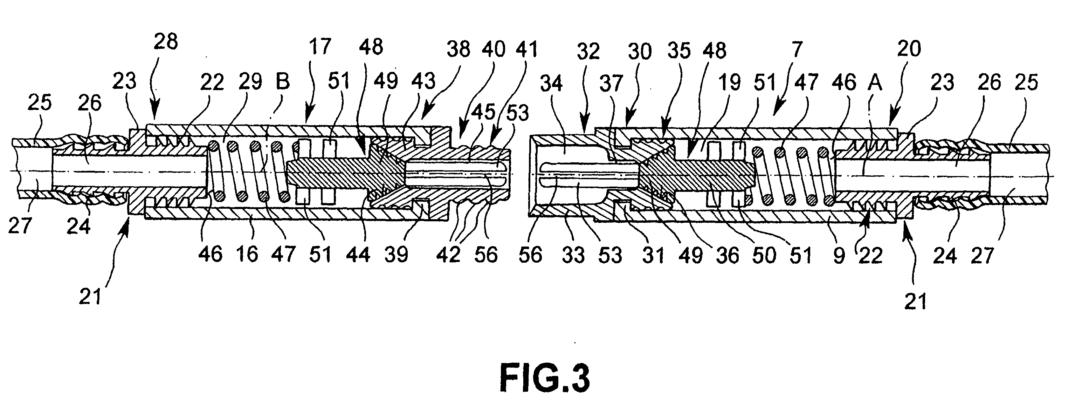

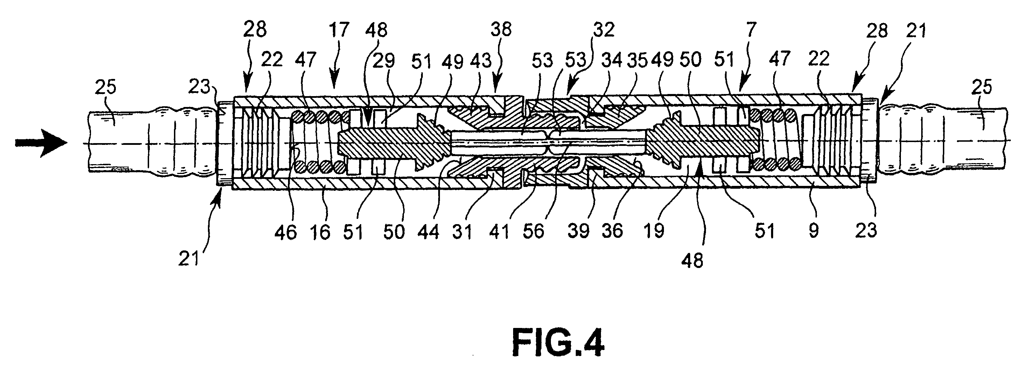

Anhand der Fig. 3 und 4 wird im folgenden der detaillierte Aufbau der Fluiddose 7 und des Fluidsteckers 17 näher erläutert.

In dem Gehäusebereich 9 der Fluiddose 7 ist eine zylindrische Bohrung 19 angeordnet, die parallel zu den Stiftkontakten 4 und 5 verläuft. In das hintere Ende 20 der Durchgangsbohrung 19 ist ein Anschlußstopfen 21 fest eingedrückt. Hierzu weist der Anschlußstopfen 21 entsprechende Tannenbaumprofilierungen 22 auf, die sich in der Innenwandung der Durchgangsbohrung 19 verkrallen. Der Anschlußstopfen 21 weist einen Flansch 23 auf, der als Anschlag am hinteren Ende 20 des Gehäusebereichs 9 dient. Daran schließt sich nach außen hin eine weitere Tannenbaumprofilierung 24 an, auf die das Ende eines Schlauches 25 fest aufgeschoben ist. Der Anschlußstopfen 21 weist zur entsprechenden Zuleitung eine Durchgangsbohrung 26 auf, die mit dem Strömungskanal 27 des Schlauches 25 in Verbindung steht.

Der Gehäusebereich 16 des Fluidsteckers 17 weist ebenfalls eine zylindrische Durchgangsbohrung 29 auf, die den gleichen Durchmesser wie die Durchgangsbohrung 19 der Fluiddose 7 hat. In das hintere Ende 28 der Durchgangsbohrung 29 ist ein Anschlußstopfen 21 eingesteckt, der identisch zum Anschlußstopfen 21 der Fluiddose 7 ausgestaltet ist, weshalb auf diese Bauteile mit gleichen Bezugsziffern Bezug genommen wird.

Am vorderen Ende 30 ist ein nach innen in die Durchgangsbohrung 19 ragender, umlaufender Kragen 31 angeordnet. Dieser bildet eine Hinterschneidung zur Befestigung eines als Steckaufnahme 32 ausgebildeten Elastomerelementes. Die Steckaufnahme 32 weist einen hohlzylindrischen Übersteckungsbereich 33 mit einer Stecköffnung 34 und einen in der Durchgangsbohrung 19 angeordneten Ventilsitzbereich 35 auf. Eine nicht näher bezeichnete Einschnürung in der Steckaufnahme 32 dient zum Aufnehmen des Kragens 31. In dem Ventilsitzbereich 35 ist ein Ventilsitz 36 mit einer kegelstumpfmantelförmigen Fläche eingeformt. Der Ventilsitz 36 ist koaxial zur Achse A der Fluiddose 7 angeordnet. Der große Durchmesser des Ventilsitzes 36 öffnet sich zur Durchgangsbohrung 19 und der kleine Durchmesser des Ventilsitzes 36 geht in den, im Querschnitt kreisförmigen Durchgang 37 über. Der Durchgang 37 steht mit der Stecköffnung 34 in Verbindung.

In ähnlicher Weise ist an dem vorderen Ende 38 des Gehäusebereichs 16 ein in die Durchgangsbohrung 29 hineinragender umlaufender Kragen 39 angeordnet, der zum Verankern eines Einsteckelementes 40 vorgesehen ist. Das Einsteckelement 40 weist einen in die Stecköffnung 34 dichtend einsteckbaren Steckbereich 41 auf. Wie die Steckaufnahme 32 ist das Steckelement 40 aus einem Elastomermaterial und der Steckbereich 41 weist zusätzlich Dichtwülste 42 zum Andrücken an die Innenfläche der Stecköffnung 34 auf. Ein Ventilsitzbereich 43 ist mit einem, eine kegelmantelförmige Innenfläche aufweisenden Ventilsitz 44 versehen und in der Durchgangsbohrung 29 angeordnet. Der Ventilsitz 44 ist koaxial zur Hauptachse B des Fluidsteckers 17 angeordnet. Der Ventilsitz 44 weist mit seinem großen Durchmesser in Richtung des Durchgangs 29 und sein kleiner Durchmesser geht in einen, im Querschnitt kreisförmigen Durchgang 45 über. Der Durchgang 45 erstreckt sich vom Ventilsitz 44 bis ans Ende des Steckbereichs 41.

Auf der Vorderseite 46 des Anschlußstopfens 21 stützt sich jeweils eine Druckfeder 47 ab, die koaxial zu den Achsen A und B angeordnet ist. Die Druckfeder 47 drückt einen Ventilstößel 48 in seine geschlossene Stellung, so daß ein Dichtbereich 49 abdichtend mit dem Ventilsitz 36 bzw. 44 zur Anlage kommt.

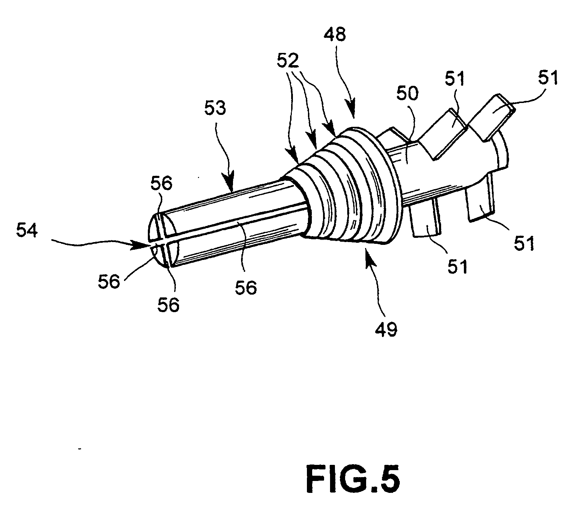

Bezüglich der detaillierten Ausgestaltung des Ventilstößels 48 wird auf die Fig. 5 Bezug genommen. Der Ventilstößel 48 weist einen nach hinten sich erstreckenden Stiftbereich 50 auf, an dem im axialen Abstand zueinander radial sich erstreckende Führungsstege 51 angeordnet sind. Jeweils drei Führungsstege 51 sind in einer Ebene angeordnet und bilden einen Führungskranz. Die Führungsstege 51 der beiden Führungskränze sind im wesentlichen in Reihe hintereinander angeordnet, um möglichst einen geringen Strömungswiderstand zu bilden. Auf dem ersten Führungskranz stützt sich die Druckfeder 47 ab. Die Führungsstege 51 eines Führungskranzes definieren einen Außendurchmesser, der geringfügig kleiner ist als der Innendurchmesser der Durchgangsbohrung 19 bzw. 29, so daß der Ventilstößel 48 kippsicher in der jeweiligen Durchgangsbohrung 19 bzw. 29 geführt bzw. zentriert ist. An den Stiftabschnitt 50 schließt sich der mit einer kegelmantelförmigen Außenfläche versehene Dichtbereich 49 an. Der in Fig. 5 dargestellte Dichtbereich 49 weist mehrere stufenförmige O-Ringsitze 52 auf, auf denen O-Ringe von jeweils unterschiedlichem Durchmesser angeordnet werden. Die O-Ringsitze 56 sowie die zugehörigen O-Ringe sind maßlich so angeordnet, daß sie möglichst gleichmäßig am Ventilsitz 36 bzw. 44 anliegen. An den kleinen Durchmesser des Dichtbereichs 49 schließt sich ein als Betätigungsstößel ausgebildeter, zylindrischer Fortsatz 53 an, der in dem in Fig. 5 dargestellten Ausführungsbeispiel einen Kreuzschlitz 54 aufweist, so daß er im Querschnitt in vier Viertelkreisabschnitte unterteilt ist.

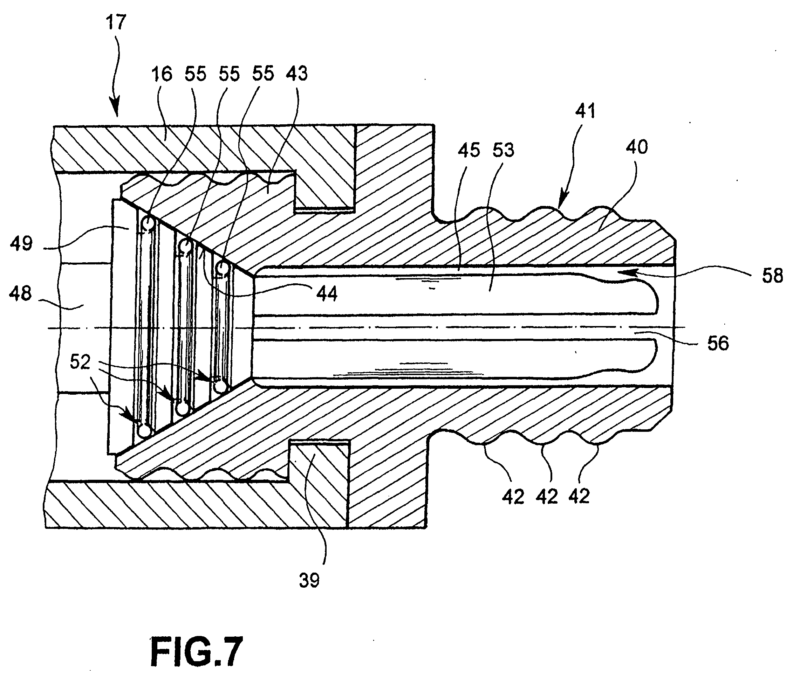

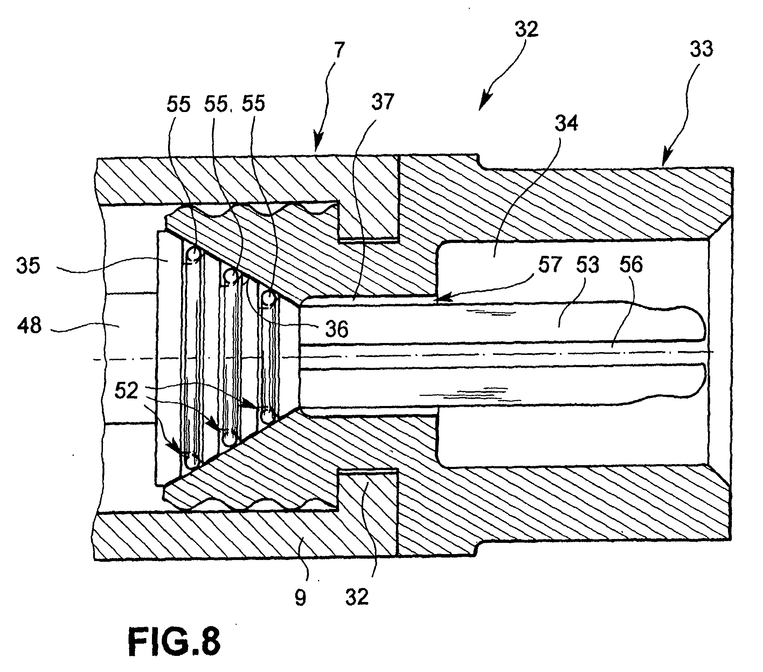

Die Anordnung der O-Ringe 55 sowie der Übersteckungsbereich sind am besten in den Fig. 7 und 8 zu erkennen.

Die O-Ringe 55 sind im möglichst gleichmäßigen Abstand voneinander auf den O-Ring-Sitzen 52 angeordnet. Der Kreuzschlitz 54 formt in den Fortsatz 53 vier Kanäle 56, die eine bestimmte Breite und Länge aufweisen. Zwischen dem Durchgang 37 und dem Fortsatz 53 befindet sich ein Spalt 57, der im Querschnitt im wesentlichen zylinderringförmig ist und eine gewisse Länge und Breite aufweist. Der Spalt 57 mündet in der Stecköffnung 34, in den sich auch der Fortsatz 53 bei der Fluiddose 7 erstreckt (siehe Fig. 8).

Bei dem Fluidstecker 17 erstreckt sich der Fortsatz 53 fast bis zum Ende des Steckelementes 40. Auch hier weist der Fortsatz 53 die durch den Kreuzschlitz 54 gebildeten Kanäle 56 von einer bestimmten Breite und Länge auf. Zwischen dem Durchgang 45 und dem Fortsatz 53 ist ein zylinderringförmiger Spalt 58 gebildet, der eine bestimmte Länge und Breite aufweist.

Die Länge und Breite sowohl der Kanäle 56 als auch der Spalte 57 und 58 soll so bemessen sein, daß abhängig von der hindurchzuleitenden Flüssigkeit (in aller Regel destilliertes Wasser) eine Restflüssigkeit zurückhaltende Kapillarwirkung bei geschlossenem Ventilsystem vorhanden ist.

Im folgenden wird die Funktionsweise des oben beschriebenen Ausführungsbeispiels näher erläutert.

Der in Fig. 1 dargestellte Stiftkontaktstecker 1 befindet sich bevorzugt an einem Ladegerät zum Aufladen von Traktionsbatterien. Insbesondere sollen durch diesen Stiftkontaktstecker 1 Naßbatterien (oder andere Technologien) aufgeladen werden, wobei über die Fluiddose 7 Batterieflüssigkeit ausgetauscht bzw. nachgefüllt werden soll (es handelt sich hierbei in der Regel um destilliertes Wasser) und über die Fluiddose 8 Luft hindurchfließen soll, um eine Elektrolytumwälzung durchzuführen. Der Stiftkontaktstecker 1 wird mit einer Buchsenkontaktdose 10 einer Batterie gekuppelt. Dabei kommen die Hauptkontakte 4 und 13 und die Pilotkontakte 5 und 14 miteinander in Kontakt. Dies geht jedoch nur, wenn die Kodierstifte 6 und 15 übersteckbar sind.

Gleichzeitig werden die Steckelemente 40 der Buchsenkontaktdose 10 in die Steckaufnahmen 32 des Stiftkontaktsteckers 1 eingeführt. Durch die Dichtwülste 42 erfolgt somit eine dichte Verbindung zwischen dem Fluidstecker 17 und der Fluiddose 7. Gleiches gilt für die Luftführung durch die Fluiddose 8 und den Fluidstecker 18.

Aufgrund der Maße der Steckaufnahme 32 und des Steckelementes 40 sowie die darauf abgestimmte Länge der Fortsätze 53, treffen bei diesem Steckvorgang die freien Stirnseiten der Fortsätze aufeinander. Da sich diese nunmehr nicht weiter vorwärtsbewegen können im Gegensatz zu den Gehäusebereichen 9 und 16, muß eine Ausgleichsbewegung stattfinden. Aufgrund der Tatsache, daß die Druckfedern 47 die gleichen Federkonstanten aufweisen, erfolgt ein nahezu gleichzeitiges Öffnen des VentilSystems, in dem sich die Ventilsitze 36 bzw. 44 von den Dichtbereichen 49 der Ventilstößel 48 wegbewegen. In aller Regel wird der Durchgang 19 unter Fluid- bzw. Flüssigkeitsdruck gestanden haben, so daß dann die Flüssigkeit von dem Schlauch 25 der Fluiddose 7, an der Druckfeder 47 und im Ventilschlüssel 48 vorbei sich durch den Spalt 57 und die Kanäle 56 hindurchzwängt und in ähnlicher Weise in den Fluidstecker 17 übergeht. Hierdurch steht die Batterie unter einem Flüssigkeitszulauf. Ein separates Ventil an dem Schlauch 25 kann zur Hauptverriegelung des Flüssigkeitszu- bzw. Ablaufs verwendet werden.

Damit das Durchströmen des Fluidsteck-Systems nicht mit einem zu großen Strömungswiderstand erfolgt, muß die Länge und Breite der Spalte 57 und Kanäle 56 so gewählt sein, daß ein möglichst großer Strömungsquerschnitt bereitgestellt wird; jedoch sich dennoch die positive, Restflüssigkeit zurückhaltende Kapillarwirkung beim Trennen von Fluidstecker 17 und Fluiddose 7 einstellt. Bevorzugt beträgt der Strömungsquerschnitt im Bereich des Durchgangs 37 und 45 mindestens 40% des Strömungsquerschnitts des Zuleitungsschlauches 25. Dies garantiert eine optimale Wasserführung. Nach dem Ladevorgang werden der Stiftkontaktstecker 1 und die Buchsenkontaktdose 10 wieder voneinander getrennt. Hierdurch wird auch automatisch der Schließvorgang des VentilSystems in dem Fluidstecker 17 und der Fluiddose 7 eingeleitet, so daß der Dichtbereich 49 mit den jeweiligen Ventilsitzen 36 bzw. 44 zur Anlage kommt. Die Feder 47 sorgt dann für die entsprechende Dichtkraft.

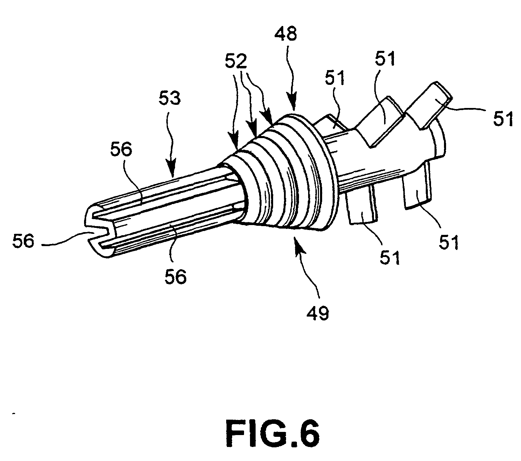

Eine weitere Variante eines Ventilstößels 48 ist in der Fig. 6 dargestellt. Soweit es sich um identische Elemente zum vorherigen Ausführungsbeispiel handelt, wird auf diese mit gleichen Bezugsziffem Bezug genommen und auf die obige Beschreibung verwiesen.

Der Hauptunterschied dieses Ventilstößels 48 besteht in der Ausgestaltung des Fortsatzes 53. Der Fortsatz 53 weist ebenfalls einen im wesentlichen kreisförmigen Grundquerschnitt auf, in den drei Kanäle 56 eingeformt sind. Zwei dieser Kanäle 56 verlaufen parallel zueinander und weisen mit ihrer Öffnung in die gleiche Richtung. Der dritte Kanal 56 ist auf der gegenüberliegenden Seite des Fortsatzes 53 angeordnet und verläuft mittig zwischen den beiden anderen Kanälen 56, wobei seine Öffnung in die entgegengesetzte Richtung weist. Hierdurch erhält der Fortsatz 53 einen im Prinzip W-förmigen Querschnitt. Dieser Querschnitt ist äußerst stabil und nicht so nachgiebig, wie der oben beschriebene Querschnitt des Fortsatzes 53. Die Länge und Breite der Kanäle 56 ist wieder so gewählt, daß sich im geschlossenen Zustand der Ventil-Systeme die gewünschte Restflüssigkeit zurückhaltende Kapillarwirkung einstellt. Ebenfalls ist anhand der Querschnittsform der Kanäle 56 zu erkennen, daß diese sich in Richtung ihres Kanalgrundes hin verjüngen, was die Kapillarwirkung und den Saugeffekt auch in dieser Richtung noch verstärkt. Ein ähnlicher Effekt läßt sich auch durch die Verjüngung der Kanalbreite von der Spitze des Fortsatzes 53 zum Dichtbereich 49 erreichen.

Der Vollständigkeit halber sei angemerkt, daß bei der Fluiddose 7 sich die Kapillarwirkung am Fortsatz 53 auch positiv auf eventuelle sich ansammelnde Flüssigkeit in der Stecköffnung 34 auswirkt. Auch hier ist bei dem Abstand vom Fortsatz 53 zur Innenfläche der Stecköffnung 34 dieser Effekt, soweit möglich, berücksichtigt worden.

## Patentansprüche

1. Kombinierter Lade- und Fluidsteckverbinder mit mindestens einem Fluidstecksystem, das ein Fluidstecker (17) und eine mit diesem steckbare Fluiddose (7) umfaßt, **dadurch gekennzeichnet, daß** der Fluidstecker (17) und die Fluiddose (7) jeweils einen im Strömungspfad (19, 29) angeordneten Ventilstößel (48) aufweisen, der jeweils mittels einer Federeinrichtung (47) in Richtung eines im Strömungspfad (19, 29) angeordneten, eine Durchlaßöffnung umgebenden Ventilsitzes (36, 44) vorgespannt ist und dessen Dichtabschnitt (49) im ungesteckten Zustand von Fluidstecker (17) und Fluiddose (7) auf dem Ventilsitz (36, 44) zum Schließen der Durchlaßöffnung dichtend aufsitzt, daß jeder Ventilstößel (48) einen als Betätigungsstößel ausgebildeten Fortsatz (53) aufweist, der jeweils in einen Übersteckungsbereich (33, 41) des Fluidsteckers (17) und der Fluiddose (7) derart hineinragt, daß im gesteckten Zustand von Fluidstecker (17) und Fluiddose (7) der Fortsatz (53) des Fluidsteckers (17) von einem Anschlag der Fluiddose (7) und der Fortsatz (53) der Fluiddose (7) von einem Anschlag des Fluidsteckers (17) mit einer Verschiebekraft entgegen der Wirkung der zugehörigen Federeinrichtung zum Öffnen der jeweiligen Durchlaßöffnung verschoben ist, wobei die Fortsätze (53) zumindest abschnittsweise in einem zum Strömungspfad gehörenden Durchgang (37, 45) angeordnet sind und der Spalt (57, 58) zwischen einer Außenoberfläche des Fortsatzes (53) und der Innenfläche des Durchgangs (37, 45) eine Länge und Breite derart aufweist, daß sich zumindest im ungesteckten Zustand von Fluidstecker (17) und Fluiddose (7) im Spalt (57, 58) eine, eine Restflüssigkeit bindende Kapillarwirkung einstellt.

2. Steckverbinder nach Anspruch 1, **dadurch gekennzeichnet, daß** der Ventilstößel (48) und der Fortsatz (53) koaxial zueinander angeordnet sind, und daß die Anschläge für die Fortsätze (53) im Fluidstecker (17) oder in der Fluiddose (7) jeweils von einer Stirnseite des jeweils zugeordneten Fortsatzes (53) des übersteckbaren Fluidsteckers (17) oder der Fluiddose (7) gebildet sind.

3. Steckverbinder nach Anspruch 1 oder 2, **dadurch gekennzeichnet, daß** der Fortsatz (53) im wesentlichen aus einem zylindrischen Grundkörper gebildet ist und die Innenfläche des Durchgangs (37, 45) im Fluidstecker (17) oder in der Fluiddose (7) im wesentlichen als eine zylindrische Mantelfläche ausgestaltet ist.

4. Steckverbinder nach einem der Ansprüche 1 bis 3, **dadurch gekennzeichnet, daß** der Spalt (57, 58) eine mittlere Breite von 0,1 mm bis 1 mm, bevorzugt 0,6 mm, aufweist.

5. Steckverbinder nach einem der Ansprüche 1 bis 4, **dadurch gekennzeichnet, daß** die Länge des Spaltes (57, 58) mindestens 4 mm beträgt.

6. Steckverbinder nach einem der Ansprüche 1 bis 5, **dadurch gekennzeichnet, daß** in dem Fortsatz (53) mindestens ein sich längs erstreckender Kanal (56) angeordnet ist, dessen Breite und Länge derart gewählt ist, daß sich zumindest im ungesteckten Zustand von Fluidstecker (17) und Fluiddose (7) im Kanal (56) eine, eine Restflüssigkeit bindende Kapillarwirkung einstellt.

7. Steckverbinder nach Anspruch 6, **dadurch gekennzeichnet, daß** der Kanal (56) eine Breite von 0,1 mm bis 1 mm, bevorzugt 0,6 mm, und eine Länge von mindestens 4 mm aufweist.

8. Steckverbinder nach Anspruch 6 oder 7, **dadurch gekennzeichnet, daß** der Fortsatz (53) drei Kanäle (56) aufweist, die derart versetzt zueinander angeordnet sind, daß der Fortsatz (53) einen im wesentlichen W-förmigen Querschnitt aufweist.

9. Steckverbinder nach Anspruch 6 oder 7, **dadurch gekennzeichnet, daß** der Fortsatz (53) zum Bilden der Kanäle (56) kreuzförmig längs geschlitzt ist.

10. Steckverbinder nach einem der Ansprüche 6 bis 9, **dadurch gekennzeichnet, daß** der mindestens eine Kanal (56) sich in Richtung seiner Tiefe in seiner Breite verengt.

11. Steckverbinder nach einem der Ansprüche 6 bis 10, **dadurch gekennzeichnet, daß** der mindestens eine Kanal (56) sich in Richtung auf den Dichtabschnitt (49) am Ventilstößel (48) zu in seiner Breite verengt.

12. Steckverbinder nach einem der Ansprüche 6 bis 11, **dadurch gekennzeichnet, daß** der Gesamtquerschnitt des Spaltes (57, 58) und des mindestens einen Kanals (56) mindestens 30% des fiktiven Grundkörper-Querschnitts des Fortsatzes (53) beträgt.

13. Steckverbinder nach einem der Ansprüche 6 bis 12, **dadurch gekennzeichnet**, der Fluidstecker (17) oder die Fluiddose (7) mit einem Zuleitungs- bzw. Abführschlauch (25) verbunden sind, wobei der Gesamtquerschnitt des Spaltes (57,58) und des mindestens einen Kanals (56) mindestens 30%, bevorzugt 40% des Durchlaßquerschnitts des Zuleitungs- bzw. Abführschlauchs (25) beträgt.

14. Steckverbinder nach einem der Ansprüche 1 bis 13, **dadurch gekennzeichnet, daß** der Ventilsitz (36, 44) im wesentlichen kegelmantelförmig ausgestaltet ist und der Dichtabschnitt (49) des Ventilstößels (48) eine daran angepaßte Kontur aufweist.

15. Steckverbinder nach Ansprüch 14, **dadurch gekennzeichnet, daß** der Dichtabschnitt (49) als gestufte Kegelstumpfkontur am Ventilstößel (48) ausgestaltet ist, wobei zumindest eine Stufe als Dichtungsringsitz (52) ausgebildet ist, und daß mindestens ein Dichtring (55) auf dem Dichtungsringsitz (52) angeordnet ist und mit dem Ventilsitz (36, 44) in Anlage bringbar ist.

16. Steckverbinder nach einem der Ansprüche 6 bis 11, **dadurch gekennzeichnet, daß** der Dichtabschnitt (49) am Ventilstößel (48) von einem mit einer kegelstumpfförmigen Mantelfläche versehenen, elastischen Dichtkörper gebildet ist.

17. Steckverbinder nach einem der Ansprüche 1 bis 16, **dadurch gekennzeichnet, daß** der Ventilsitz (36, 44), der Durchgang (37, 45) und der Übersteckungsbereich (33, 41) des Fluidsteckers (17) und der Fluiddose (7) von einem einstückig hergestellten Elastomerelement (32, 40) geformt sind.

18. Steckverbinder nach einem der Ansprüche 1 bis 17, **dadurch gekennzeichnet, daß** die Federeinrichtung eine koaxial zum Ventilstößel (48) angeordnete Druckfeder (47) ist, die auf der dem Fortsatz (53) abgewandten Seite des Ventilstößels (48) auf diese eine Kraft ausübt.

19. Steckverbinder nach einem der Ansprüche 1 bis 18, **dadurch gekennzeichnet, daß** der Ventilstößel (48) auf der dem Fortsatz (53) abgewandten Seite einen Stiftabschnitt (50) mit radial abstehenden Führungsstegen (51) aufweist, wobei die Führungsstege (51) den Ventilstößel (48) axial im Strömungspfad (19, 29) führen, und daß die Federeinrichtung sich an der Seitenflanke zumindest eines Führungsstegs (51) abstützt.

20. Steckverbinder nach einem der Ansprüche 1 bis 19, **dadurch gekennzeichnet, daß** der Ventilsitz (36, 44), der Ventilstößel (48) und die Federeinrichtung (47) koaxial in einem gemeinsamen rohrförmigen Gehäuse (9,16) des Fluidsteckers (17) oder der Fluiddose (7) angeordnet sind, wobei an einem Ende des Gehäuses (9, 16) der Übersteckungsbereich (33, 41) und an dem anderen Ende der Zuleitungs- bzw. Abführschlauch (25) angeordnet ist.

## Claims

1. Combined charging and fluid plug-type connector having at least one fluid plug-type system which comprises a fluid plug (17) and a fluid socket (7) which can be plugged together with the latter, **characterized in that** the fluid plug (17) and the fluid socket (7) each have a valve stem (48) which is arranged in the flow path (19, 29) and which in each case is preloaded by means of a spring device (47) in the direction of a valve seat (36, 44), arranged in the flow path (19, 29) and surrounding a conducting opening, and the sealing section (49) of which, in the unplugged state of fluid plug (17) and fluid socket (7), sits in a sealing manner on the valve seat (36, 44) for closing the conducting opening, **in that** each valve stem (48) has an extension (53) which is designed as an actuating plunger and which in each case projects into a bridging region (33, 41) of the fluid plug (17) and the fluid socket (7) in such a way that, in the plugged state of fluid plug (17) and fluid socket (7), the extension (53) of the fluid plug (17) is displaced by a stop of the fluid socket (7) and the extension (53) of the fluid socket (7) is displaced by a stop of the fluid plug (17) with a displacing force against the action of the associated spring device for opening the respective conducting opening, the extensions (53), at least in sections, being arranged in a passage (37, 45) belonging to the flow path, and the gap (57, 58) between an outer surface of the extension (53) and the inner surface of the passage (37, 45) having such a length and width that, at least in the unplugged state of fluid plug (17) and fluid socket (7), a capillary action binding a residual fluid occurs in the gap (57, 58).

2. Plug-type connector according to Claim 1, **characterized in that** the valve stem (48) and the extension (53) are arranged coaxially to one another, and **in that** the stops for the extensions (53) in the fluid plug (17) or in the fluid socket (7) are in each case formed by an end face of the respectively assigned extension (53) of the fluid plug (17), which can be bridged, or of the fluid socket (7).

3. Plug-type connector according to Claim 1 or 2, **characterized in that** the extension (53) is essentially formed from a cylindrical basic body, and the inner surface of the passage (37, 45) in the fluid plug (17) or in the fluid socket (7) is essentially configured as a cylindrical lateral surface.

4. Plug-type connector according to one of Claims 1 to 3, **characterized in that** the gap (57, 58) has an average width of 0.1 mm to 1 mm, preferably 0.6 mm.

5. Plug-type connector according to one of Claims 1 to 4, **characterized in that** the length of the gap (57, 58) is at least 4 mm.

6. Plug-type connector according to one of Claims 1 to 5, **characterized in that** at least one longitudinally extending channel (56) is arranged in the extension (53), the width and length of which channel (56) is selected in such a way that, at least in the unplugged state of fluid plug (17) and fluid socket (7), a capillary action binding a residual fluid occurs in the channel (56).

7. Plug-type connector according to Claim 6, **characterized in that** the channel (56) has a width of 0.1 mm to 1 mm, preferably 0.6 mm, and a length of at least 4 mm.

8. Plug-type connector according to Claim 6 or 7, **characterized in that** the extension (53) has three channels (56) which are offset from one another in such a way that the extension (53) has an essentially W-shaped cross section.

9. Plug-type connector according to Claim 6 or 7, **characterized in that** the extension (53) for forming the channels (56) is slit longitudinally in a cross shape.

10. Plug-type connector according to one of Claims 6 to 9, **characterized in that** the at least one channel (56) narrows in its width in the direction of its depth.

11. Plug-type connector according to one of Claims 6 to 10, **characterized in that** the at least one channel (56) narrows in its width in the direction towards the sealing section (49) on the valve stem (48).

12. Plug-type connector according to one of Claims 6 to 11, **characterized in that** the overall cross section of the gap (57, 58) and of the at least one channel (56) is at least 30% of the imaginary basic-body cross section of the extension (53).

13. Plug-type connector according to one of Claims 6 to 12, **characterized in that** the fluid plug (17) or the fluid socket (7) are connected to a feed and discharge tube (25), respectively, the overall cross section of the gap (57, 58) and of the at least one channel (56) being at least 30%, preferably 40%, of the conducting cross section of the feed and discharge tube (25), respectively.

14. Plug-type connector according to one of Claims 1 to 13, **characterized in that** the valve seat (36, 44) is configured essentially in the shape of a lateral surface of a cone, and the sealing section (49) of the valve stem (48) has a contour adapted thereto.

15. Plug-type connector according to Claim 14, **characterized in that** the sealing section (49) is configured as a stepped frustoconical contour on the valve stem (48), at least one step being designed as a sealing-ring seat (52), and **in that** at least one sealing ring (55) is arranged on the sealing-ring seat (52) and can be brought into contact with the valve seat (36, 44).

16. Plug-type connector according to one of Claims 6 to 11, **characterized in that** the sealing section (49) on the valve stem (48) is formed by an elastic sealing body provided with a frustoconical lateral surface.

17. Plug-type connector according to one of Claims 1 to 16, **characterized in that** the valve seat (36, 44), the passage (37, 45) and the bridging region (33, 41) of the fluid plug (17) and of the fluid socket (7) are formed by an elastomer element (32, 40) produced in one piece.

18. Plug-type connector according to one of Claims 1 to 17, **characterized in that** the spring device is a compression spring (47) which is arranged coaxially to the valve stem (48) and exerts a force on the valve stem (48) on that side of the latter which is remote from the extension (53).

19. Plug-type connector according to one of Claims 1 to 18, **characterized in that** the valve stem (48), on the side remote from the extension (53), has a pin section (50) with radially projecting guide webs (51), the guide webs (51) guiding the valve stem (48) axially in the flow path (19, 29), and **in that** the spring device is supported on the side flank of at least one guide web (51).

20. Plug-type connector according to one of Claims 1 to 19, **characterized in that** the valve seat (36, 44), the valve stem (48) and the spring device (47) are arranged coaxially in a common tubular housing (9, 16) of the fluid plug (17) or of the fluid socket (7), the bridging region (33, 41) being arranged at one end of the housing (9, 16) and the feed or discharge tube (25), respectively, being arranged at the other end.

## Revendications

1. Raccord à emmanchement combiné, de charge et de fluide, comprenant au moins un système de raccord à emmanchement de fluide qui comprend un raccord de fluide mâle (17) et un raccord de fluide femelle (7) qui peut y être emmanché,
**caractérisé en ce que**
le raccord de fluide mâle (17) et le raccord de fluide femelle (7) présentent chacun un poussoir de soupape (48) disposé dans le canal d'écoulement (19, 29) qui, à chaque fois, est précontraint au moyen d'un dispositif élastique (47) vers un siège de soupape (36, 44) disposé dans le canal d'écoulement (19, 29), entourant une ouverture de passage (36, 44), et dont le segment d'étanchéité (49) est appuyé à joint étanche sur le siège de soupape (36, 44) pour obturer l'ouverture de passage dans l'état non emmanché du raccord de fluide mâle (17) et du raccord de fluide femelle (7), chaque poussoir de soupape (48) présente un prolongement (53) réalisé sous la firme d'un poussoir d'actionnement qui s'engage dans une région d'emboîtement mutuel (33, 41) du raccord de fluide mâle (17) et du raccord de fluide femelle (7), de sorte que dans l'état emmanché du raccord de fluide mâle (17) et du raccord de fluide femelle (7), le prolongement (53) du raccord de fluide mâle (17) est poussé par une butée du raccord de fluide femelle (7) et le prolongement (53) du raccord de fluide femelle (7) est poussé par une butée du raccord de fluide mâle (17), avec une force de translation à l'encontre de l'action du dispositif élastique correspondant pour ouvrir l'ouverture de passage concernée, les prolongements (53) étant disposés, du moins en partie, dans un passage traversant (37, 45) appartenant au canal d'écoulement, alors que la fente (57, 58) entre une surface extérieure du prolongement (53) et la surface intérieure du passage traversant (37, 45) présente une longueur et une largeur telles que, au moins dans l'état non emmanché du raccord de fluide mâle (17) et du raccord de fluide femelle (7), un effet de capillarité qui retient un liquide résiduel s'établit dans la fente (57, 58).

2. Raccord à emmanchement selon la revendication 1,
**caractérisé en ce que**
le poussoir de soupape (48) et le prolongement (53) sont disposés coaxialement l'un à l'autre et les butées pour les prolongements (53) prévus dans le raccord de fluide mâle (17) ou dans le raccord de fluide femelle (7) sont formées à chaque fois par un côté frontal du prolongement (53) correspondant du raccord de fluide mâle (17) pouvant être emmanché ou du raccord de fluide femelle (7).

3. Raccord à emmanchement selon la revendication 1 ou 2,
**caractérisé en ce que**
le prolongement (53) est essentiellement formé d'un corps de base cylindrique et la surface intérieure du passage traversant (37, 45) formé dans le raccord de fluide mâle (17) ou dans le raccord de fluide femelle (7) est essentiellement constituée par une surface latérale cylindrique.

4. Raccord à emmanchement selon une des revendications 1 à 3,
**caractérisé en ce que**
la fente (57, 58) présente une largeur moyenne de 0,1 mm à 1 mm, de préférence de 0,6 mm.

5. Raccord à emmanchement selon une des revendications 1 à 4,
**caractérisé en ce que**
la longueur de la fente (57, 58) est d'au moins 4 mm.

6. Raccord à emmanchement selon une des revendications 1 à 5,
**caractérisé en ce que**
dans le prolongement (53) est disposé au moins un canal (56) s'étendant longitudinalement, dont la largeur et la longueur sont choisies de manière qu'au moins dans l'état non emmanché du raccord de fluide mâle (17) et du raccord de fluide femelle (7), un effet de capillarité qui retient un liquide résiduel s'établit dans le canal (56).

7. Raccord selon la revendication 6,
**caractérisé en ce que**
le canal (56) a une longueur de 0,1 à 1 mm, de préférence 0,6 mm, et une longueur d'au moins 4 mm.

8. Raccord à emmanchement selon la revendication 6 ou 7,
**caractérisé en ce que**
le prolongement (53) présente trois canaux (56) qui sont décalés l'un par rapport à l'autre, de telle manière que le prolongement (53) présente une section sensiblement en forme de W.

9. Raccord à emmanchement selon la revendication 6 ou 7,
**caractérisé en ce que**
le prolongement (53) est fendu longitudinalement en croix pour former les canaux (56).

10. Raccord à emmanchement selon une des revendications 6 à 9,
**caractérisé en ce que**
l'au moins un canal (56) se rétrécit en largeur en direction de sa profondeur.

11. Raccord à emmanchement selon une des revendications 6 à 10,
**caractérisé en ce que**
l'au moins un canal (56) se rétrécit en largeur en direction du segment d'étanchéité (49) du poussoir de soupape (48).

12. Raccord à emmanchement selon une des revendications 6 à 11,
**caractérisé en ce que**
la section totale de la fente (57, 58) et de l'au moins un canal (56) vaut au moins 30 % de la section fictive de corps de base du prolongement (53).

13. Raccord à emmanchement selon une des revendications 6 à 12,
**caractérisé en ce que**
le raccord de fluide mâle (17) ou le raccord de fluide femelle (7) sont reliés à un tuyau de ligne d'amenée ou de départ respectivement (25), la section totale de la fente (57, 58) et de l'au moins un canal (56) représentant au moins 30 %, de préférence 40 % de la section de passage du tuyau de ligne d'amenée ou de départ respectivement (25).

14. Raccord à emmanchement selon une des revendications 6 à 13,
**caractérisé en ce que**
le siège de soupape (36, 44) est de forme sensiblement tronconique et le segment d'étanchéité (49) du poussoir de soupape (47, 48) présente un contour adapté à ce siège.

15. Raccord à emmanchement selon la revendication 14,
**caractérisé en ce que**
le segment d'étanchéité (49) présente un profil de tronc de cône étagé sur le poussoir de soupape (48), au moins un étage formant un siège de bague d'étanchéité (52), et au moins une bague d'étanchéité (55) disposée sur le siège de bague d'étanchéité (52) peut s'appuyer contre le siège de soupape (36, 44).

16. Raccord à emmanchement selon une des revendications 6 à 11,
**caractérisé en ce que**
le segment d'étanchéité (49) prévu sur le poussoir de soupape (48) est formé par un corps d'étanchéité élastique muni d'une surface latérale tronconique.

17. Raccord à emmanchement selon une des revendications 1 à 16,
**caractérisé en ce que**
le siège de soupape (36, 44), le passage traversant (37, 45) et la région d'emboîtement mutuel (33, 41) du raccord de fluide mâle (17) et du raccord de fluide femelle (7) sont formés d'un élément en élastomère (32, 40) fabriqué d'une seule pièce.

18. Raccord à emmanchement selon une des revendications 1 à 17,
**caractérisé en ce que**
le dispositif élastique est un ressort de compression (47) disposé coaxialement au poussoir de soupape (48) et qui, sur le côté du poussoir de soupape (48) qui est éloigné du prolongement (53), exerce une force sur ce côté.

19. Raccord à emmanchement selon une des revendications 1 à 18,
**caractérisé en ce que**
sur le côté éloigné du prolongement (53), le poussoir de soupape (48) présente un segment de tige (50) muni d'ailettes de guidage (51) en saillie radiale, les ailettes de guidage (51) guidant le poussoir de soupape (48) axialement dans le canal d'écoulement (19, 29), et le dispositif élastique prend appui sur le flanc latéral d'au moins une ailette de guidage (51).

20. Raccord à emmanchement selon une des revendications 1 à 19,
**caractérisé en ce que**
le siège de soupape (36, 44), le poussoir de soupape (48) et le dispositif élastique (47) sont disposés coaxialement dans un boîtier tubulaire commun (9, 16) du raccord de fluide mâle (17) ou du raccord de fluide femelle (7), la région d'emboîtement mutuel (33, 41) étant disposée à une extrémité du boîtier (9, 16) et le tuyau de ligne d'amenée, respectivement ou de départ (25) étant disposé à l'autre extrémité.
